# EUROPEAN PATENT SPECIFICATION

(11) **EP 3 695 104 B1**
(45) Date of publication and mention of the grant of the patent: **08.12.2021**
(21) Application number: 18800754.6
(22) Date of filing: 12.10.2018
(51) Int. Cl.: F01L 3/20, F16K 15/16, F02B 33/30, F02B 33/04, F02M 69/10, F02M 69/04, F02B 75/02, F01M 3/00

(54) **TWO-STROKE INTERNAL COMBUSTION HEAT ENGINE**
ZWEITAKTBRENNKRAFTWÄRMEMASCHINE
MOTEUR THERMIQUE À COMBUSTION INTERNE À DEUX TEMPS

(30) Priority: 12.10.2017 IT 201700115306; 04.05.2018 IT 201800005088
(43) Date of publication of application: 19.08.2020
(73) Proprietor: Vins S.r.l., 41121 Modena (IT)
(72) Inventor: MATTIA, Vincenzo, 18038 Sanremo (IM) (IT); PERINO, Davide, 10085 Pont Canavese (TO) (IT); GIULIANI, Attilio, 41124 Modena (IT); EVANGELISTA, Giuseppe, 85010 Vaglio Basilicata (PZ) (IT); DOINO, Vincenzo, 41013 Castelfranco Emilia (MO) (IT); TRENTANI, Nicola, 41043 Formigine (MO) (IT)
(74) Representative: Maccagnan, Matteo
(86) International application number: PCT/IB2018/057930
(87) International publication number: WO 2019/073448

(56) References cited:
- EP-A1- 0 943 788
- EP-A1- 3 114 334
- US-A- 3 687 118
- US-A- 4 922 866
- US-A- 5 396 867
- US-A1- 2002 130 199
- US-A1- 2003 062 006
- US-B1- 6 318 331

## Description

### TECHNICAL FIELD

The invention relates to a two-stroke internal combustion heat engine.

### PRIOR ART

The two-stroke internal combustion heat engine was invented by Dugald Clerk in 1879 and mainly differs from the more common four-stroke internal combustion heat engine because of the different alternation of the active stokes (power strokes) in relation to the revolutions of the crankshaft; indeed, whereas in the four-stroke engine there is one active stroke (namely, the expansion stroke, during which chemical energy is transformed into thermal energy and, hence, into kinetic energy) for every two revolutions of the shaft, in the two-stroke engine there is an active stroke for each complete revolution of the shaft. From a structural point of view, a two-stroke internal combustion heat engine usually does not have the traditional intake and exhaust valves, which are replaced by the "*ports*", namely non-circular slits, which are directly obtained on the cylinder and are opened and closed by the reciprocating motion of the piston.

The two-stroke internal combustion heat engine is an extremely simple engine, is compact, light and economic and, for this reason, in the past it was almost always used in mopeds with small displacements (usually of no more than 125-150 cc) and in all small-sized applications (small generator sets, chainsaws, lawn mowers, small outboard motor for boats). However, current two-stroke internal combustion heat engines are not capable of complying with the requirements of the new laws enforced in terms of emissions of heat engines. Since there is a large overlap between the intake stroke and the exhaust stroke (during the overlap both the intake ports and the exhaust ports are simultaneously open), a significant part (up to 40-50%) of the fresh charge (i.e. the air taken into the cylinder through the intake ports) directly flows into the exhaust without being affected by the combustion; in case of indirect fuel injection, the fresh charge already is a mixture of air and fuel and, therefore, the overlap between the intake stroke and the exhaust stroke leads to a significant quantity of unburned hydrocarbons being released into the environment.

In order to remarkably decrease the quantity of unburned hydrocarbons released into the environment, the use of direct injection of fuel into the cylinder was suggested, so that the fuel can be injected only when the exhaust ports are closed (in this case, during the overlap, the fresh charge flowing out of the exhaust ports solely consists of fresh air). However, in order to obtain a good mixing of the fuel directly injected into the cylinder with the fresh air taken into the cylinder by the intake ports, very sophisticated injection systems are usually necessary, thus leading to high costs, which basically cancel the economic and compactness advantages that are the very reasons for which the two-stroke internal combustion heat engine is chosen.

Patent application WO2004106714A1 describes a two-stroke internal combustion heat engine with direct fuel injection, wherein fuel is directly injected into the cylinder by means of an injector having a nozzle that is oriented so as to direct the fuel jet against a wall of the cylinder head arranged beside a spark plug mounted in a central position. Patent application WO2009044225A1 describes a two-stroke internal combustion heat engine with direct fuel injection, wherein fuel is directly injected into the cylinder by means of an injector having a nozzle that is oriented so as to direct the fuel jet (having an internally hollow conical shape due to a hole with a conical shape present inside the fuel jet itself) against a wall of the cylinder head arranged around the spark plug mounted in a central position. However, the two-stroke internal combustion heat engine described in patent applications WO2004106714A1 and WO2009044225A1 has different operating irregularities, as, at many rpms, it does not allow for an optimal mixing between the fuel directly injected into the cylinder and the fresh air taken into the cylinder by the intake ports.

Patent application EP0738827A1 and patent application US2015184579A1 describe a two-stroke internal combustion heat engine with indirect fuel injection, wherein fuel is injected into an intake duct, which leads into a crank chamber through a reed valve.

Patent US4922866A1 describes a two-stroke engine in accordance with the preamble of independent claim 1, with six "V"-shaped cylinders, which is provided with six reed valves, each one having, on the inside, a fuel injector, which injects fuel downstream of the reed valve relative to the fresh air feeding direction along the intake duct.

. Patent application WO2016128861A1 describes a two-stroke engine, wherein two injectors are arranged on opposite sides of a reed valve and are completely independent of the reed valve from a mechanical point of view.

In known two-strokes internal combustion heat engines there usually is not a lubrication circuit with a continuous recirculation of the lubricant, but the lubrication of the moving parts takes place through washing and by means of loss lubrication systems, as the lubricant is indirectly/directly introduced into the intake manifold and, therefore, accompanies the air/fuel mixture in all its strokes. In more modern known two-stroke internal combustion heat engines, there is lubricant feeding system, which comprises a lubricant tank (which is separate from and independent of the fuel tank) and an electronically-controlled lubrication pump, which gets the lubricant from the tank and feeds the lubricant under pressure towards the intake duct through a feeding duct. However, this solution is affected by some drawbacks, as the lubricant flow rate introduced into the feeding duct is relatively high in order to ensure an adequate lubrication of all moving parts, over time the lubricant tends to dirty the intake duct and the components contained in the intake duct (with a consequent potential reduction of the intake performances) and, when the heat engine is turned off, the lubricant can keep flowing out, thus accumulating in the crank chamber (hence, making the cold starting of the heat engine more difficult and causing a significant increase in the production of unburned hydrocarbons when the heat engine is started). Furthermore, the introduction of the lubricant oil cannot be precisely synchronized, in the right amount, with the intake stroke, if the system is not provided with lubricant injectors equipped with a separated circuit (which, however, are much more complex and expensive).

### DESCRIPTION OF THE INVENTION

The object of the invention is to provide a two-stroke internal combustion heat engine, which is not affected by the drawbacks described above and, at the same time, can be manufactured in a simple and low-cost manner.

According to the invention, there is provided a two-stroke internal combustion heat engine according to the appended claims.

The appended claims describe preferred embodiments of the invention and form an integral part of the description.

### BRIEF DESCRIPTION OF THE DRAWINGS

The invention will now be described with reference to the accompanying drawings, showing a non-limiting embodiment thereof, wherein:
- figure 1 is a schematic view of a two-stroke internal combustion heat engine with fuel injection according to the invention;
- figure 2 is a schematic, partially sectional view of the heat engine of figure 1;
- figure 3 is a schematic, exploded view of the heat engine of figure 1;
- figure 4 is a schematic, partially sectional view of a reed valve of the heat engine of figure 1;
- figures 5 and 6 are two different schematic, perspective views of the reed valve of figure 4;
- figure 7 is a schematic, sectional view of a different embodiment of the heat engine of figure 1;
- figure 8 is a perspective view, in a closed configuration, of an alternative embodiment of the reed valve of figure 4;
- figure 9 is a perspective view, in an open configuration, of the reed valve of figure 8;
- figures 10 and 11 are two different perspective views, showing hidden parts and in a closed configuration, of the reed valve of figure 8; and
- figure 12 is a further perspective view, in an open configuration, of the reed valve of figure 8.

### PREFERRED EMBODIMENTS OF THE INVENTION

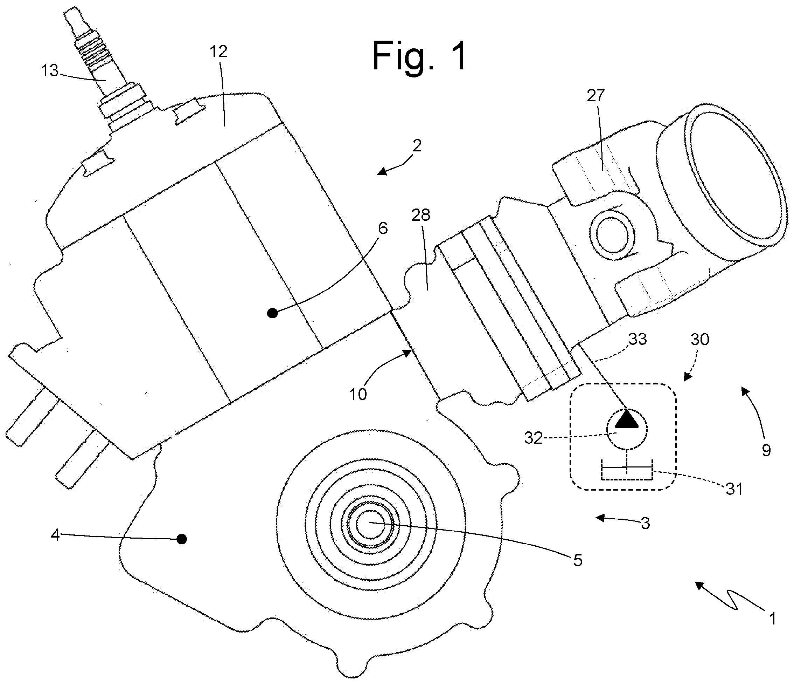

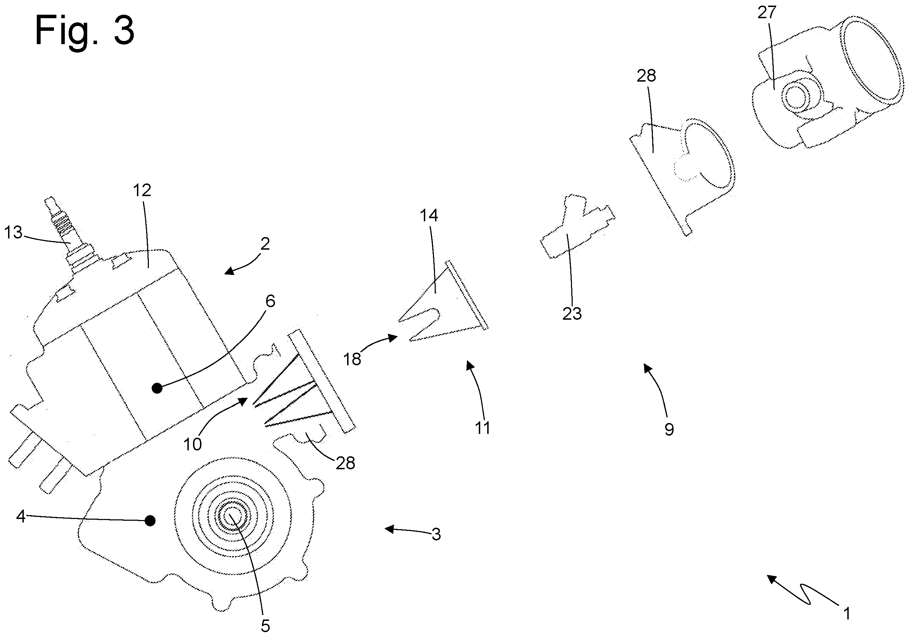

In figures 1, 2 and 3, number 1 indicates, as a whole, a two-stroke internal combustion heat engine with fuel injection.

In the (non-limiting) embodiment shown in the accompanying figures, the heat engine 1 is a one-cylinder engine, i.e. it comprises one single cylinder 2, which projects from a crankcase 3 (according to other embodiments, which are not shown herein, the heat engine 1 could be a two-cylinder engine or even have more than two cylinders 2); inside the crankcase 3 there is obtained a crank chamber 4, which houses a crankshaft 5.

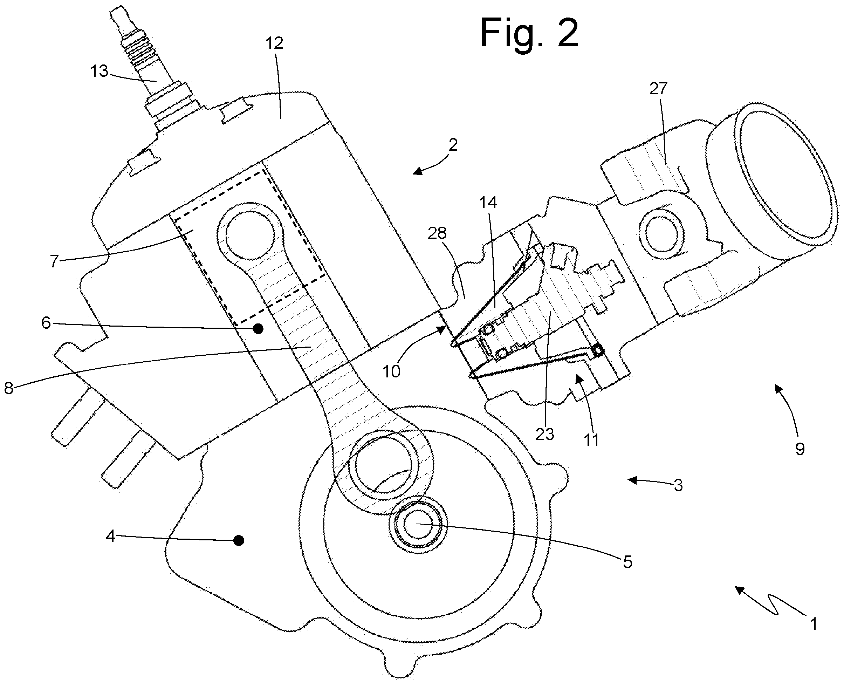

The cylinder 2 comprises, on the inside, a combustion chamber 6, which has a cylindrical symmetry around a longitudinal axis and where a piston 7 (which is schematically shown in figure 2) slides in a reciprocating manner. The piston 7 is connected to the crankshaft 5 by means of a connecting rod 8, whose lower part is arranged inside the crank chamber 4.

In the side wall of the combustion 6 chamber there is at least one exhaust port (which is completely known and, therefore, not shown), which expels the exhaust gases towards an exhaust duct and is cyclically opened and closed by the reciprocating movement of the piston 7.

The heat engine 1 shown in figures 1, 2 and 3 has the intake in the crankcase, i.e. fresh air (namely, air containing approximately 20% of oxygen and coming from the outside) and fuel (usually petrol) are fed to the crank chamber 4 under the piston 7 and are sucked into the combustion chamber 6 through transfer ducts (which are completely known and, therefore, not shown) obtained through the piston 7. In particular, fresh air is sucked into the crank chamber 4 due to the depression generated in the crank chamber 4 by the upward movement of the piston 7 from the BDC (bottom dead centre) to the TDC (top dead centre); on the other hand, fresh air is sent to the combustion chamber 6 through the transfer ducts due to the overpressure generated in the crank chamber 4 by the downward movement of the piston 7 from the TDC (top dead centre) to the BDC (bottom dead centre).

In the area of the crankcase 3 there is an intake duct 9, through which the fresh air needed for the combustion (namely, air containing approximately 20% of oxygen and coming from the outside) is taken in. The intake duct 9 is provided with a filter box (not shown), which houses, on the inside, an air filter and leads into the crank chamber 4 through an intake opening 10 made in a wall of the crank chamber 4 itself.

The intake duct 9 ends with a reed valve 11, which is arranged in the area of the intake opening 10 so as to adjust the opening and the closing of the intake duct 9. In other words, the reed valve 11 opens (i.e. allows fresh air to get into the crank chamber 4) when the pressure inside the intake duct 9 is (properly) greater than the pressure present in the crank chamber 4, and the reed valve 11 closes (i.e. prevents fresh air from getting into the crank chamber 4) when the pressure inside the intake duct 9 is smaller than the pressure present in the crank chamber 4. Therefore, the reed valve 11 is a passive device designed to adjust the flow rate used to introduce fresh air into the crank chamber 4 opening and closing the intake duct 9 as a function of the pressure differential between the crank chamber 4 and the intake duct 9.

The cylinder 2 comprises a head 12, which closes the combustion chamber 6 at the top; namely, the head 12 is a sort of lid, which delimits the combustion chamber 6 at the top. Through each head 12 there is arranged (screwed) a spark plug 13, which has, at the bottom, a pair of electrodes arranged inside the combustion chamber 6; a spark cyclically goes off between the electrodes (i.e. at the end of the compression stroke), thus determining the ignition of the air and fuel mixture present in the combustion chamber 6. The spark plug 13 is arranged at the centre of the head 12 and, hence, at the centre of the combustion chamber 6; in other words, the spark plug 13 is coaxial to the longitudinal axis of the combustion chamber 6.

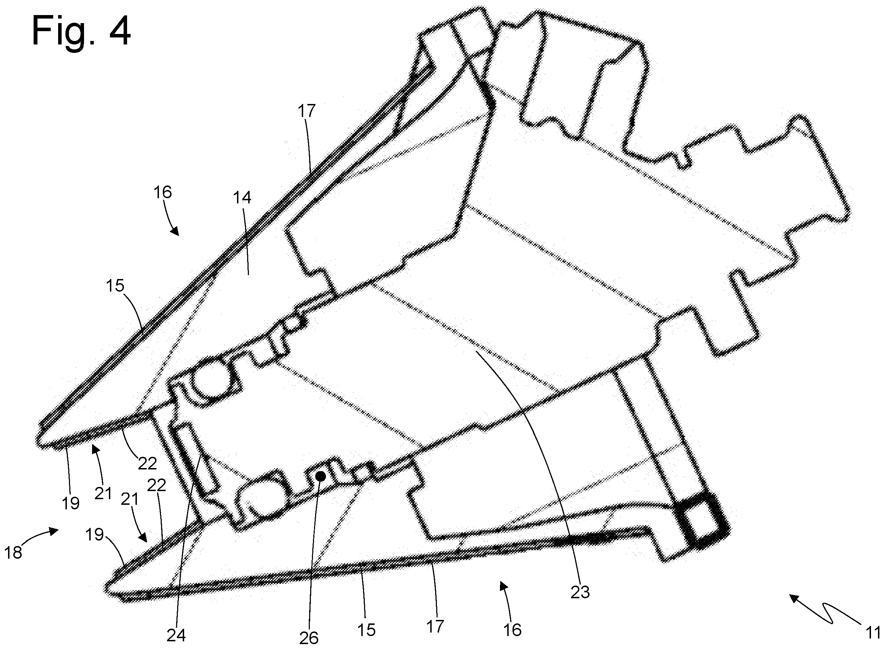

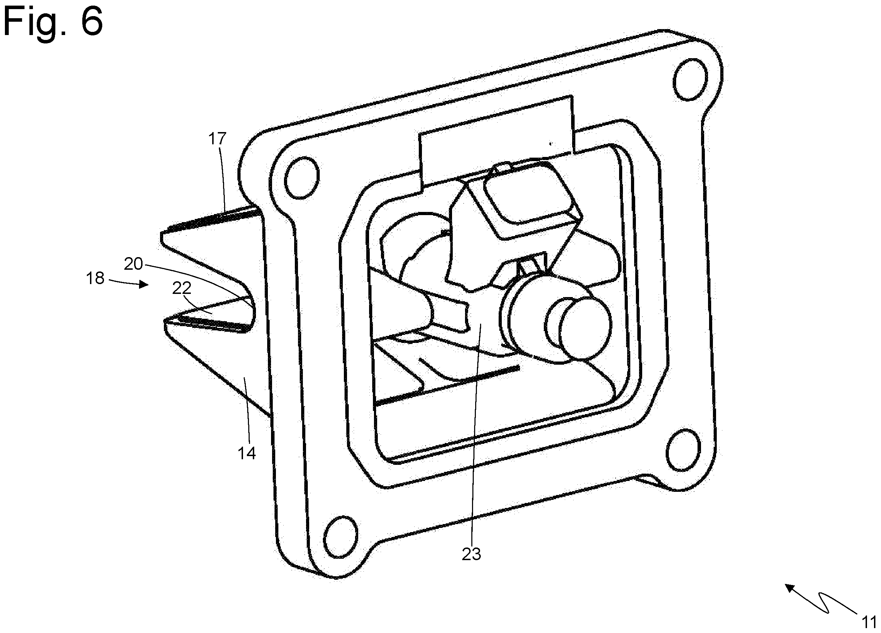

According to figures 4, 5 and 6, the reed valve 11 comprises a support body 14 (usually made of a plastic material or, alternatively, of aluminium), which is wedge-shaped and in which the base is completely open and makes up the inlet area on the intake side (i.e. the area through which fresh air flows in). The support body 14 has two inclined outer walls 15, which are opposite one another and have an opposite inclination relative to one another (i.e. the two outer walls 15 converge towards the point of the wedge). Through each outer wall 15 there is obtained a pair of through openings 16, each engaged by a corresponding flexible reed petal 17 (for example, made of steel, carbon fibres, glass fibres, or of a plastic material); each flexible reed valve 17 is fixed to the support body 14 on one single side, so as to be free to deform by lifting from the corresponding opening 16, thus allowing fresh air to flow through the opening 16.

According to a preferred, though non-limiting embodiment shown in the accompanying figures, between the two outer walls 15 of the support body 14 there is obtained a groove 18 having two inner walls 19, which are parallel to and face one another (i.e. the two inner walls 19 "*look*" at each other); the two inner walls 19 are joined to one another by a bottom wall 20 with a semicircular cross section (i.e. with a semicylindrical shape) defining the bottom of the groove 18. Through each inner wall 19 there is obtained a pair of through openings 21, each engaged by a corresponding flexible reed petal 22, which is completely similar to the flexible reed petals 17 (except for the different dimensions).

Each single reed petal 17 and/or 22 can have one single petal or different petals, which can be completely divided from one another, be joined at the ends, or can be combined with one another with the same material or with different materials. According to a possible embodiment, the support body 14 can support stoppers, namely shaped plates, which are mounted behind the reed petals 17 and/or 22 to limit the travel of the reed petals 17 and/or 22. According to a possible embodiment, the reed petals 17 and/or 22 can be provided with corresponding dampers.

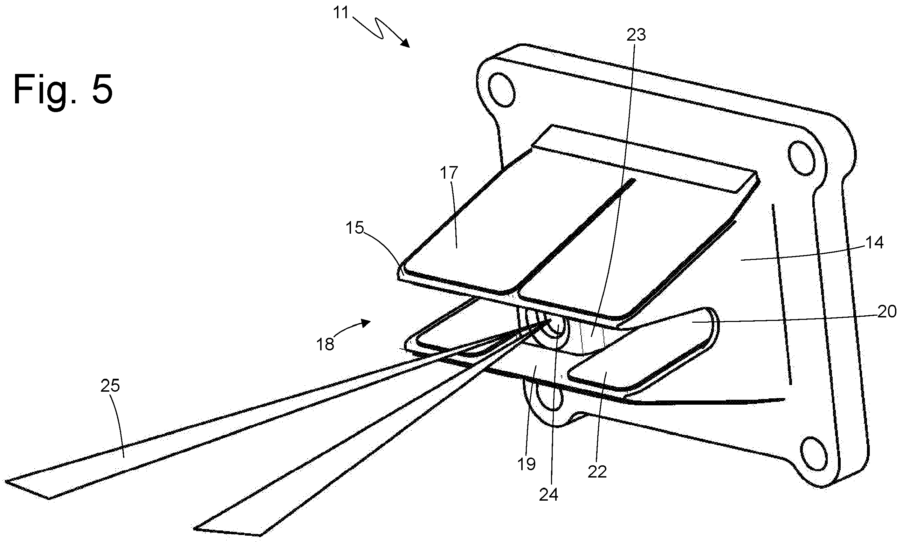

The reed valve 11 further comprises an injector 23, which is mounted on the support body 14 and directly injects into the crank chamber 4. In other words, the reed valve 11 is provided with the injector 23, which directly leads into the crank chamber 4. In particular, the end part of the injector 23 (i.e. the injection nozzle 24 of the injector 23) is arranged inside the groove 18 between the openings 21, so that a fuel jet 25 (shown in figure 5), which cyclically flows out of the injection nozzle 24, is directed into the crank chamber 4. In other words, the injection nozzle 24 sprays fuel towards the crank chamber 4 (hence, towards the combustion chamber 6), namely it sprays fuel downstream of the reed valve 11 relative to the fresh air feeding direction along the intake duct 9. According to figure 4, the support body 14 has, at the centre, a through hole 26, which opens up through the bottom wall 20 of the groove 18 and houses the injector 23.

In other words, the support body 14 of the reed valve 11 encloses and defines an inner volume (directly connected to the intake duct 9), from which the air taken in can flow out only by flowing through the openings 16 and 21, when the openings 16 and 21 are freed from the corresponding flexible reed petals 17 and 22 (when the flexible reed petals 17 and 22 elastically deform, thus lifting from the support body 14); the injection nozzle 24 of the injector 3 is on the outside of the inner volume defined by the support body 14 of the reed valve 11 so as to spray fuel downstream of the reed valve 11 itself relative to the fresh air feeding direction along the intake duct 9.

Thanks to its position, the injector 23 is capable of spraying fuel in the crank chamber 4 in any moment, regardless of the inlet of air through the intake opening 10, namely regardless of the opening/closing of the reed petals 17 and 22. In this way, the control of the injector 23 is significantly simplified, since the activation of the injector 23 does not need to be perfectly synchronized with the movement of the reed petals 17 and 22 (by the way, the movement of the reed petals 17 and 22 is linked to pressure differentials and to the elasticity of the reed petals 17 and 21 and, therefore, it is hardly predictable with precision). In other words, the fuel injection stroke carried out by the injector 23 to inject fuel into the crank chamber 4 is completely independent of the air intake stroke, which is due to the movement of the reed petals 17 and 22, thus ensuring greater simplicity and freedom in the management of injection times and allowing for an efficiency increase with a consequent fuel saving, given the same performances.

Thanks to its position, the fuel sprayed by the injector 23 can be mixed with the fresh air entering the crank chamber 4 in an effective and efficient manner, since, when the reed petals 17 and 22 open, the fuel sprayed by the injector 23 directly flows into the fresh air flow entering the crank chamber 4 through the openings 16 and 21. In particular, the fuel jet released by the injector 23, besides being already injected with a pressure that is such as to make it atomized, is also subjected to a mixing with the air coming from the intake; this phenomenon is further increased by the rotary movement of the crankshaft 5, which follows the initial tangential direction of the fuel flow in order to then centrifugate it in the crank chamber 4 and in the transfers of the cylinder 2.

According to a preferred embodiment shown in figures 1, 2 and 3, the intake duct 9 comprises a throttle valve 27, which is directly connected to a tubular element 28, which houses, on the inside, the reed valve 11; in other words, the reed valve 11 is housed (supported) by a tubular element 28, which, on one side, is fixed to the crankcase 2 and, on the opposite side, is directly connected to the throttle valve 27. According to an alternative embodiment, which is not shown herein, the intake duct 9 comprises a valve that has a different shape from a throttle valve, or the intake duct 9 is not provided with a throttle valve 27.

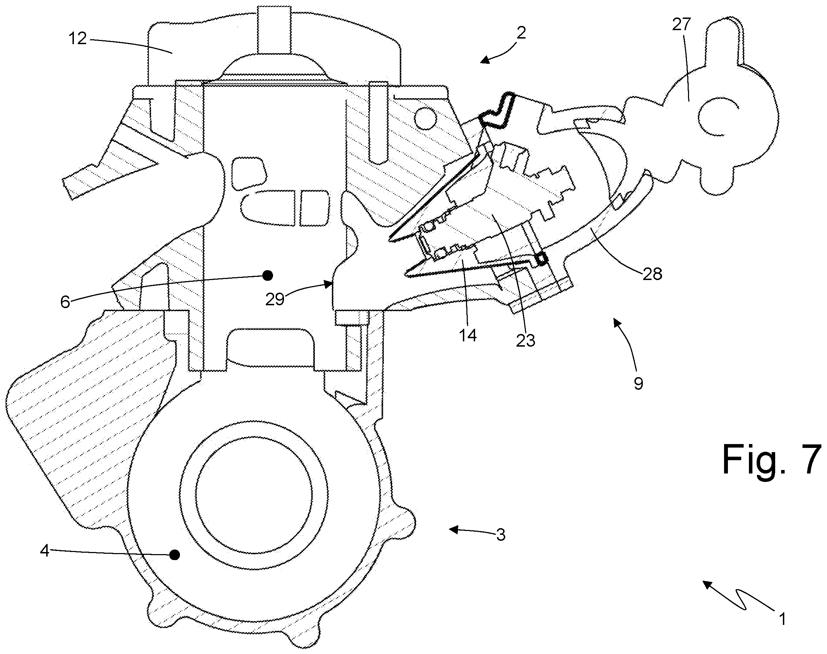

In the embodiment shown in figures 1-6, the heat engine 1 has the intake in the crankcase and, therefore, the reed valve 11, which carries the injector 23, is arranged in the area of the crank chamber 4. In the alternative embodiment shown in figure 7, the heat engine 1 has the intake in the combustion chamber 6; as a consequence, in the side wall of the combustion chamber 6 there is at least one intake port 29 (opposite the exhaust port), which receives fresh air from the intake duct 9 and is cyclically opened and closed by the movement of the piston 7. In the embodiment shown in figure 7, as well, the reed valve 11 is arranged along the intake duct 9 close to the intake port 29 and, therefore, the injector 23, which is carried by the reed valve 11, directly sprays fuel into the combustion chamber 6.

In the embodiment shown in figure 7, the injection nozzle 24 of the injector 23 faces away from the cylinder head 12 and, hence, fuel is injected by the injector 23 towards the bottom of the cylinder 2 (therefore, on the side opposite the crown of the piston 7). According to an alternative embodiment, which is not shown herein, the injection nozzle 24 of the injector 23 faces the cylinder head 12 so as to inject fuel towards the cylinder head 12 itself according to the disclosure of patent 102017000061734, which is included herein as a reference. In this latter embodiment, which is not shown herein, the longitudinal axis of the injector 23 forms, with the longitudinal axis of the combustion chamber 6, an angle preferably ranging from 55° to 65° (for instance, equal to 60.5°). Furthermore, the longitudinal axis of the injector 23 is oriented so as to intersect the electrodes of the spark plug 13, namely the prolongation of the longitudinal axis of the injector 23 goes through the electrodes of the spark plug 13.

Furthermore, in this latter embodiment, which is not shown herein, the injector 23 generates a fuel jet 25 having a conical shape (with the vertex of the cone arranged close to the injection nozzle 24) and having, at the centre, a hole (i.e. an area without fuel), which also has a conical shape (with the vertex arranged close to the injection nozzle 24). In other words, the fuel jet 25 generated by the injector 23 has the shape of a conical shell due to the presence of the central hole, namely it has an internally hollow conical shape. The central hole of the fuel jet 25 of the injector 23 is sized so as to comprise, on the inside, the electrodes of the spark plug 13; as a consequence, the fuel injected by the injector 23 (i.e. the fuel making up the fuel jet 25) wets the lower wall of the cylinder head 12 arranged around the spark plug 13, while it does not wet the electrodes of the spark plug 13.

As already mentioned above, the heat engine 1 is a two-stroke engine and, therefore, it requires a constant supply of lubricant (oil) to lubricate, among other things, the main bearings, the bearings of the connecting rod, the crankshaft 5, the piston pin and the cylinder 2. In order to do so, the heat engine 1 is provided with a lubricant feeding system 30 (schematically shown in figure 1), which comprises a lubricant tank 31 (which is separate from and independent of the fuel tank) and an electronically-controlled lubrication pump 32, which gets the lubricant from the tank 31 and feeds the lubricant under pressure towards the intake duct 9 through a feeding duct 33.

According to a possible embodiment, the feeding duct 33 leads into the intake duct 9 upstream of the reed valve 11 so as to introduce the lubricant into the air taken in still on the inside of the intake duct 9. Furthermore, according to a possible embodiment, the feeding duct 33, in its end part, could branch off so as to introduce the lubricant into two distinct areas, thus improving the mixing of the lubricant in the air taken in.

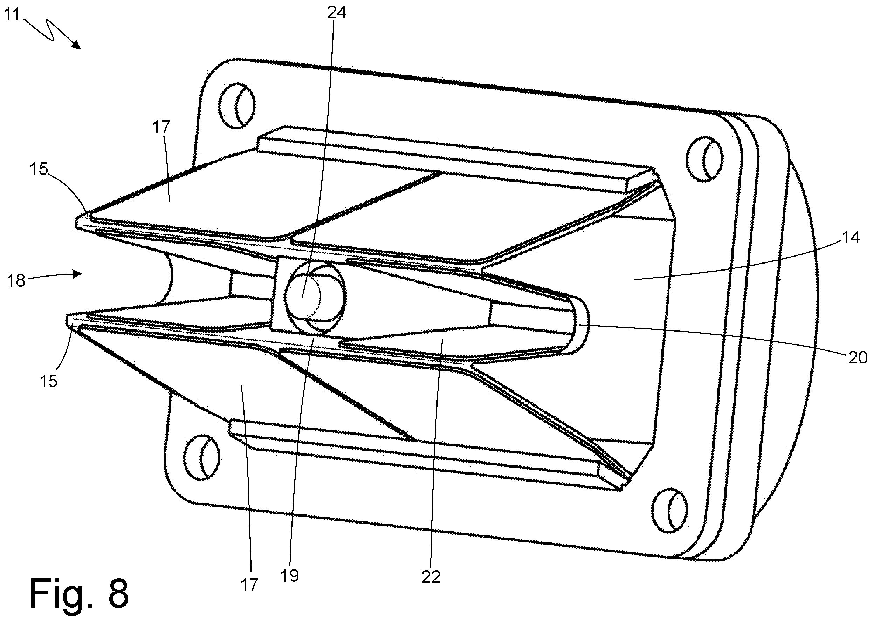

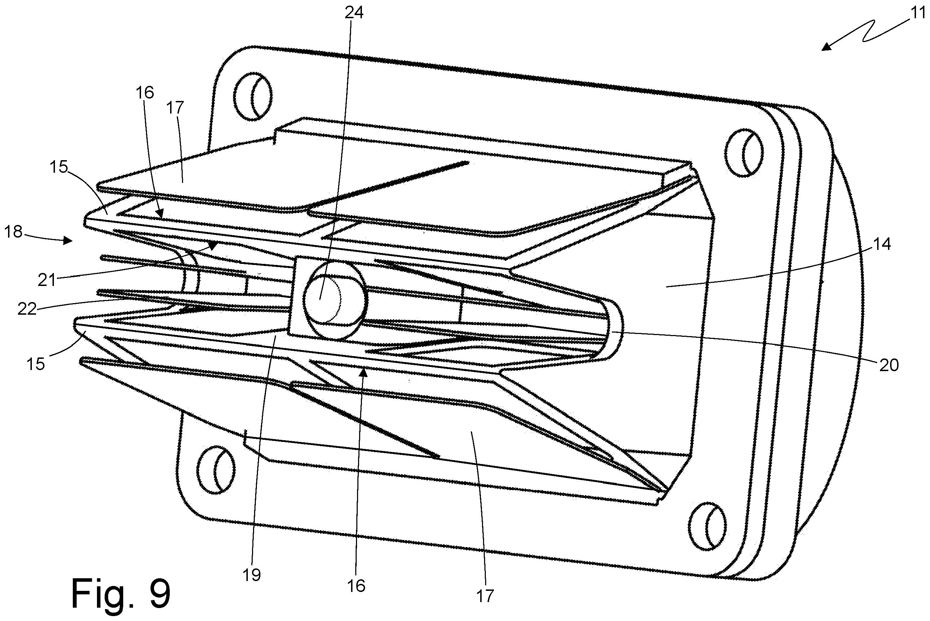

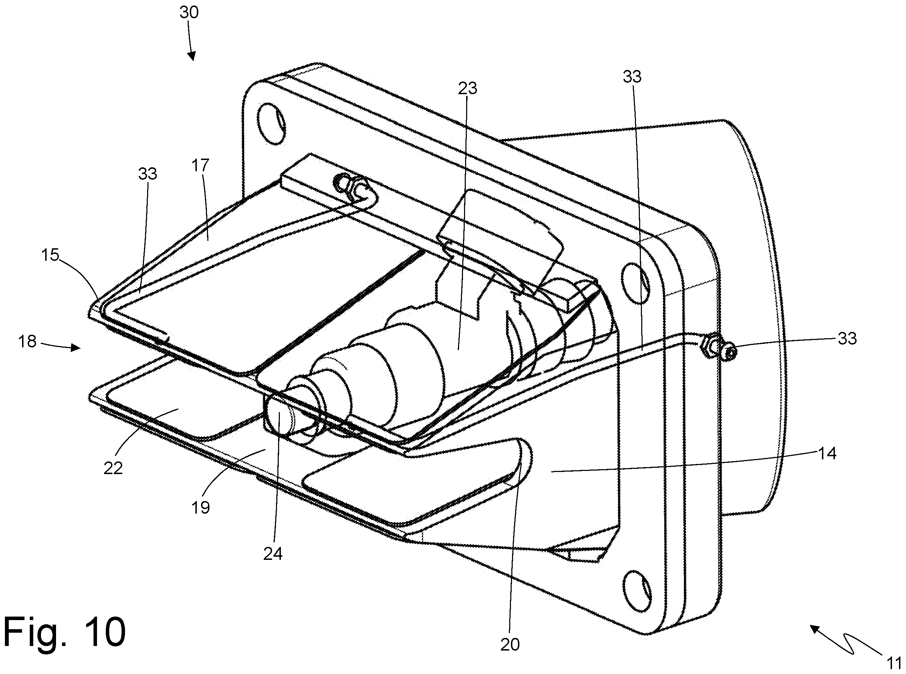

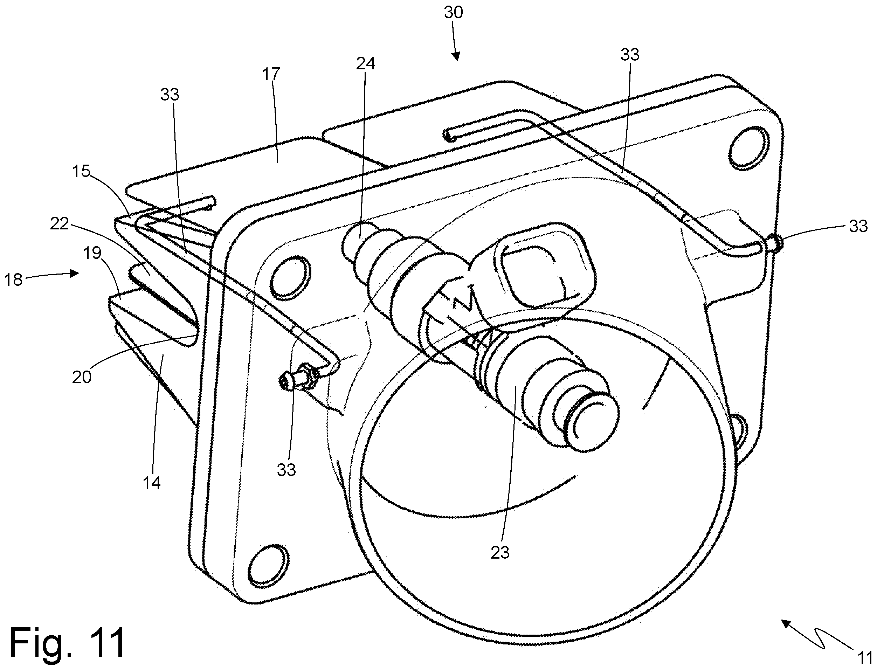

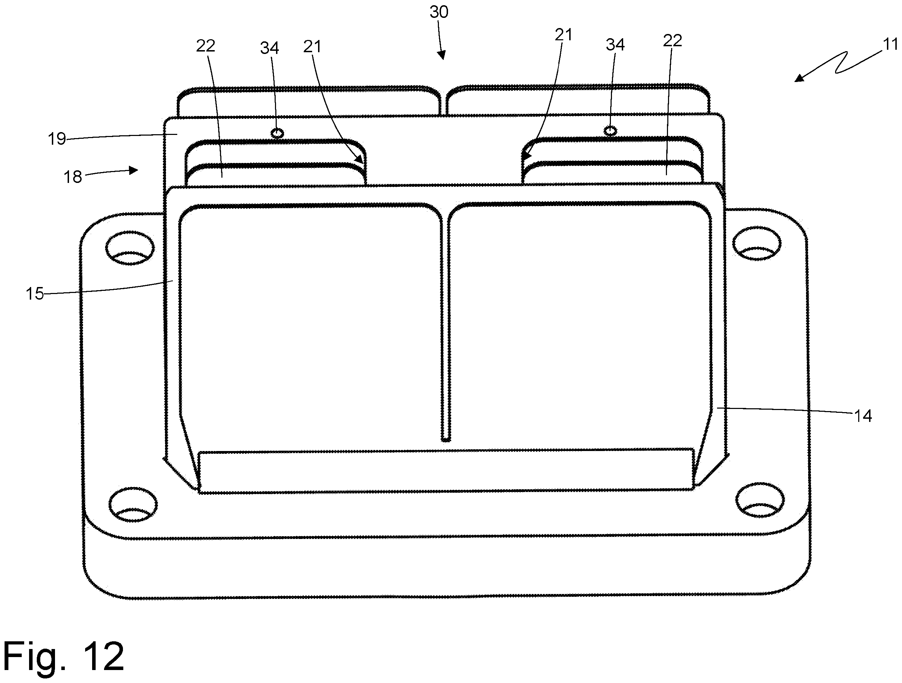

According to the embodiment shown in figures 8-12, the feeding duct 33 (which, in its end part, branches off) leads into two lubrication orifices 34, which are obtained through the inner wall 19 of the support body 14 of the reed valve 11 close to the respective openings 21, so that each lubrication orifice 34 is closed by a corresponding reed petal 22 when the reed petal 22 rests against the inner wall 19 (i.e. when the reed petal closes the respective opening 21). In this way, the lubricant under pressure is fed (getting mixed with the air take in) only when the air actually is taken in (hence, only when the heat engine 1 has been started), i.e. only when the reed petals 22 open, thus simultaneously freeing both the openings 21 through which the air taken in flows and the lubrication orifices 34 through which the lubricant flows.

In particular, the two end parts of the feeding duct 33 (which has already branched off before) are directly obtained inside the support body 14 of the reed valve 11, namely they are obtained inside the melt of the support body 14 of the reed valve 11.

In the non-limiting embodiment shown in figures 8-12, the feeding system 30 has two lubrication orifices 34, according to a different embodiment, which is not shown herein and is perfectly equivalent, the feeding system 30 has a different number of lubrication orifices 34 (from a minimum of one single lubrication orifice 34 to a maximum of four-eight lubrication orifices 34).

In the non-limiting embodiment shown in figures 8-12, the lubrication orifices 34 are obtained through one single inner wall 19 of the support body 14 of the reed valve 11 and are closed by two corresponding reed petals 22; according to a different embodiment, which is not shown herein and is perfectly equivalent, the lubrication orifices 34 are obtained through both inner walls 19 of the support body 14 of the reed valve 11, or they are (also or only) obtained through (at least) one outer wall 15 of the support body 14 of the reed valve 11 (and, hence, they are closed by a corresponding reed petal 17), or they are (also or only) obtained through both outer walls 15 of the support body 14 of the reed valve 11 (and, hence, are closed by corresponding reed petals 17).

During the operation of the heat engine 1, the reed petals 17 and 22 (i.e. the reed valves) open and close with a frequency that is a function of the speed of rotation of the crankshaft 5 (i.e. it is a function of the speed of the reciprocating movement of the piston 7); with the same identical frequency with which the reed petals 17 and 22 (i.e. the reed valves) open and close, lubricant is introduced into the crank chamber 4 through the lubrication orifices 34 (which are opened and closed by the reed petals 22). When the reed petals 22 are closed (i.e. rest against the corresponding inner walls 19 of the support body 14), the lubrication orifices 34 are closed (covered) by the reed petals 22 and, therefore, the lubricant cannot access the crank chamber 4 (a condition which is ensured when the engine is turned off). The fact that, when the heat engine 1 is turned off, lubricant cannot access the crank chamber 4 (since the lubrication orifices 34 are closed by the reed petals 22) prevents lubricant from uselessly entering the crank chamber 4 when the heat engine 1 is turned off: this lubricant (which flows into the crank chamber 4 when the heat engine 1 is turned off) is completely wasted, accumulates in the crank chamber 4, thus hindering the following cold starting of the heat engine 1, and causes a significant increase of unburned hydrocarbons when the heat engine is started.

When the heat engine 1 is turned on, the reed petals 22 continuously open and close, thus determining ongoing opening and closing of the lubrication orifices 34: this fact is positive because the reed petals 22, by closing, hit the lubricant drops going through the lubrication orifices 34, thus breaking surface tensions and, hence, encouraging an atomized and more diluted distribution of the lubricant inside the crank chamber 4.

In the normal operation of the heat engine 1, the reed petals 17 and 22 open and close following the pressure difference arising downstream and upstream of the reed petals 17 and 22 due to the cyclic pressure/depression generated by the reciprocating movement of the piston 7; when the reed petals 17 and 22 open, the openings 16 and 21 let through the air taken in, which flows under turbulent conditions and, hence, encourages the atomization and the diffusion of the lubricant inside the crank chamber 4. Furthermore, the drops of lubricant flowing out of the lubrication orifices 34 are hit by the fuel jet 25 flowing out of the injection nozzle 24 of the injector 23 directly mounted in the support body 14 of the reed valve 11, thus ensuring an atomization and an additional mixing of the lubricant with the fuel.

The feeding system 30 shown in figures 8-12 has numerous advantages, since it is simple and easy to be manufactured (as it basically requires, as single substantial change, the creation of the feeding ducts 33 and of the lubrication orifices 34 in the support body 14 of the reed valve 11), allows for an ideal distribution of the lubricant to all the mechanical members involved (by so doing, a smaller quantity of lubricant is used, with the same performances), completely prevents lubricant from being fed when the heat engine 1 is turned off, completely prevents lubricant from accumulating in the intake duct 9 (namely, prevents the intake duct 9 and the components contained in the intake duct 9 from being dirtied, with a consequent potential reduction of intake performances). Some estimations have revealed that the use of the feeding system 30 shown in figures 8-12 leads to a reduction, with the same performances, of the consumption of lubricant up to 50%, with an evident advantage in terms of operating costs and, especially, reduction of environmental pollution.

The embodiments described herein can be combined with one another, without for this reason going beyond the scope of protection of the invention.

The heat engine 1 described above has numerous advantages.

First of all, the heat engine 1 described above has a particularly small emission of pollutants, so much so that it can meet the requirements of the most recent regulations, known as "*Euro4*" and "*Euro5*"*,* to be applied to motorcycles and mopeds.

Furthermore, the heat engine 1 described above has an excellent operating regularity, at all rpms.

Finally, the heat engine 1 described above is particularly light, compact and economic compared to a similar four-stroke internal combustion heat engines with the same performances.

### LIST OF THE REFERENCE NUMBERS OF THE FIGURES

- 1: heat engine
- 2: cylinders
- 3: crankcase
- 4: crank chamber
- 5: crankshaft
- 6: combustion chamber
- 7: piston
- 8: crank
- 9: intake duct
- 10: intake opening
- 11: reed valve
- 12: head
- 13: spark plug
- 14: support body
- 15: outer wall
- 16: opening
- 17: reed petal
- 18: groove
- 19: inner wall
- 20: bottom wall
- 21: opening
- 22: reed petal
- 23: injector
- 24: injection nozzle
- 25: fuel jet
- 26: hole
- 27: throttle valve
- 28: tubular element
- 29: intake port
- 30: feeding system
- 31: tank
- 32: pump
- 33: feeding duct
- 34: lubrication orifice

## Claims

1. A two-stroke internal combustion heat engine (1) with fuel injection; the heat engine (1) comprises:
at least one cylinder (2), which comprises, on the inside, a combustion chamber (6);
a piston (7), which is mounted inside the cylinder (2) so as to slide in a reciprocating manner;
a cylinder head (12), which closes the combustion chamber (6) at the top and has a lower wall;
a crankcase (3), from which the cylinder projects (2) and in which a crank chamber (4) is obtained;
a crankshaft (5), which is housed in the crank chamber (4) ;
a connecting rod (8), which connects the piston (7) to the crankshaft (5);
a spark plug (13), which is mounted through the cylinder head (12);
an intake duct (9), which feeds fresh air towards the combustion chamber (6);
a reed valve (11), which is arranged inside the intake duct (9) and comprises: a wedge-shaped support body (14) having two inclined outer walls (15), which are opposite one another and have an opposite inclination relative to one another, at least two first openings (16) for the air taken in, which are made in the outer walls (15), and two first flexible reed petals (17), which closes the first openings (16) ; and
an injector (23), which is provided with an injection nozzle (24) through which fuel is injected towards the combustion chamber (6), is mounted through the support body (14) of the reed valve (11) and beside the first opening (16) engaged by the first flexible reed petal (17), so that the injection nozzle (24) is arranged on the outside of the support body (14), is not covered by the first flexible reed petal (17), and sprays fuel downstream of the reed valve (11) relative to the fresh air feeding direction along the intake duct (9);
the heat engine (1) is **characterized in that** the injector (23) is arranged between the two outer walls (15) of the wedge-shaped support body (14).

2. A heat engine (1) according to claim 1, wherein:
the support body (14) of the reed valve (11) encloses and defines an inner volume, from which the air taken in can flow out only through the first openings (16), when the first openings (16) are freed from the first flexible reed petals (17); and
the injection nozzle (24) of the injector (3) is arranged on the outside of the inner volume defined by the support body (14) of the reed valve (11).

3. A heat engine (1) according to claim 1 or 2, wherein between the two outer walls (15) of the support body (14) there is obtained a groove (24), where the injector (23) is arranged.

4. A heat engine (1) according to claim 3, wherein:
the groove (24) has two inner walls (19), which are parallel to and face one another and are joined to one another by a bottom wall (20), which defines the bottom of the groove (24); and
the support body (14) has, at the centre, a through hole (26), which opens up through the bottom wall (20) of the groove (24) and houses the injector (23).

5. A heat engine (1) according to claim 4, wherein:
through each inner wall (19) there is obtained a pair of second through openings (21), each engaged by a corresponding second flexible reed petal (22); and
the injector (23) is arranged inside the groove (24) between the second openings (21).

6. A heat engine (1) according to one of the claims from 1 to 5, wherein:
the intake duct (9) leads into the combustion chamber (6) through an intake port (29) obtained in a wall of the cylinder (2), so that the injector (23) injects fuel into the combustion chamber (6); and
the injection nozzle (24) of the injector (23) faces away from the cylinder head (12) and, hence, the fuel is injected by the injector (23) towards the bottom of the cylinder (2).

7. A heat engine (1) according to one of the claims from 1 to 5, wherein:
the intake duct (9) leads into the combustion chamber (6) through an intake port (29) obtained in a wall of the cylinder (2), so that the injector (23) injects fuel into the combustion chamber (6);
the injection nozzle (24) of the injector (23) faces the cylinder head (12) so as to spray the fuel towards the cylinder head (12);
a first longitudinal axis of the injector (23), which determines the direction along which the fuel is injected, is inclined so as to form an acute angle with a second longitudinal axis of the combustion chamber (6); and
the first longitudinal axis of the injector (23) intersects the electrodes of the spark plug (13).

8. A heat engine (1) according to one of the claims from 1 to 6, wherein:
the intake duct (9) leads into the combustion chamber (6) through an intake port (29) obtained in a wall of the cylinder (2), so that the injector (23) injects fuel into the combustion chamber (6);
the injection nozzle (24) of the injector (23) faces the cylinder head (12) so as to spray the fuel towards the cylinder head (12);
a first longitudinal axis of the injector (23), which determines the direction along which the fuel is injected, is inclined so as to form an acute angle with a second longitudinal axis of the combustion chamber (6);
the injector (23) generates a fuel jet (25) having an internally hollow conical shape due to a hole with a conical shape present inside the fuel jet (25); and
the injector (23) is sized in such a way that the central hole of the fuel jet (25) comprises, on the inside, the electrodes of the spark plug (13) and, as a consequence, the fuel injected by the injector (23) wets the lower wall of the cylinder head (12) arranged around the spark plug (13), while it does not wet the electrodes of the spark plug (13) .

9. A heat engine (1) according to one of the claims from 1 to 8 and comprising a lubricant feeding system (30) provided with a feeding duct (33) ending in a lubrication orifice (34), which is made through a wall (15, 19) of the support body (14) of the reed valve (11) and is arranged beside an opening (16, 21) for the air taken in, so that the lubrication orifice (34) is closed by a flexible reed petal (17, 22), when the flexible reed petal (17, 22) rests against the wall (15, 19) in order to close the opening (16, 21).

10. A heat engine (1) according to claim 9, wherein:
between the two outer walls (15) of the support body (14) there is obtained a groove (24) having two inner walls (19), which are parallel to and face one another and are joined to one another by a bottom wall (20), which defines the bottom of the groove (24); and
through each inner wall (19) there is obtained a pair of second openings (21), each engaged by a corresponding second flexible reed petal (22).

11. A heat engine (1) according to claim 10, wherein the lubrication orifice (34) is made through an inner wall (19) beside a second opening (21) and is closed by a corresponding second flexible reed petal (22).

12. A heat engine (1) according to claim 9, 10 or 11, wherein a final part of the feeding duct (33) bifurcates and ends in two distinct and separate lubrication orifices (34).

13. A heat engine (1) according to claim 12, wherein the two lubrication orifices (34) are arranged beside two different openings (16, 21) for the air taken in and are closed by two different flexible reed petals (17, 22).

## Patentansprüche

1. Eine Zweitaktbrennkraftwärmemaschine (1) mit einer Brennstoffeinspritzung; wobei die Wärmekraftmaschine (1) aufweist:
wenigstens einen Zylinder (7), welcher im Inneren eine Brennkammer (6) aufweist (6);
einen Kolben (7), welcher im Inneren des Zylinders (2) angeordnet ist, so dass sich dieser in einer sich hin- und herbewegenden Weise verschiebt;
einen Zylinderkopf (12), welcher die Brennkammer (6) an der Oberseite verschließt und eine untere Wand hat;
ein Kurbelgehäuse (3), von welchem sich der Zylinder (2) erstreckt und welches eine Kurbelkammer (4) enthält;
eine Kurbelwelle (5), welche in der Kurbelkammer (4) angeordnet ist;
eine Verbindungsstange (8), welche den Kolben (7) mit der Kurbelwelle (5) verbindet;
eine Zündkerze (13), welche durch den Zylinderkopf (12) befestigt ist;
einen Einlasskanal (9), welcher der Brennkammer (6) Frischluft zuführt;
ein Lamellenventil (11), welches im Inneren des Einlasskanals (9) angeordnet ist und aufweist: einen keilförmigen Befestigungskörper (14) mit zwei geneigten Außenwänden (15), welche sich einander gegenüberliegen und eine in Bezug aufeinander entgegengesetzte Neigung haben, wenigsten zwei erste Öffnungen (16) für den Lufteinlass, welche in den Außenwänden (15) vorgesehen sind, und zwei erste flexible Lamellenplättchen (17), welche die ersten Öffnungen (16) verschließen; und
ein Injektor (23), welcher mit einer Einspritzdüse (24) versehen ist, durch welche Brennstoff in die Brennkammer (6) eingespritzt wird, ist durch den Befestigungskörper (14) des Lamellenventils (11) und neben der ersten Öffnung (16), die von dem ersten flexiblen Lamellenplättchen (17) angegriffen wird, befestigt, so dass die Einspritzdüse (24) an der Außenseite des Befestigungskörpers (14) angeordnet ist, wird nicht von dem ersten flexiblen Lamellenplättchen (17) abgedeckt, und sprüht Brennstoff stromab des Lamellenventils (11) in Bezug auf die Frischluftzufuhrrichtung entlang des Einlasskanals (9);
die Wärmekraftmaschine (1) ist **dadurch gekennzeichnet, dass** der Injektor (23) zwischen den beiden Außenwänden (15) des keilförmigen Befestigungskörpers (14) angeordnet ist.

2. Eine Wärmekraftmaschine (1) nach Anspruch 1, wobei:
der Befestigungskörper (14) des Lamellenventils (11) ein Innenvolumen einschließt und definiert, von welchem die eingelassene Luft nur durch die ersten Öffnungen (16) ausströmen kann, wenn die ersten Öffnungen (16) von den ersten flexiblen Lamellenplättchen (17) freigegeben werden; und
die Einspritzdüse (24) des Injektors (3) an der Außenseite des durch den Befestigungskörper (14) des Lamellenventils (11) definierten Innenvolumens angeordnet ist.

3. Eine Wärmekraftmaschine (1) nach Anspruch 1 oder 2, wobei zwischen den beiden Außenwänden (15) des Befestigungskörpers (14) eine Nut (24) ausgebildet ist, wo der Injektor (23) angeordnet ist.

4. Eine Wärmekraftmaschine (1) nach Anspruch 3, wobei:
die Nut (24) zwei Innenwände (19) hat, welche parallel zueinander und einander zugewandt sind und durch eine Bodenwand (29) miteinander verbunden sind, welche den Boden der Nut (24) ausbildet; und
der Befestigungskörper (14) im Zentrum ein Durchgangsloch (26) hat, welches sich durch die Bodenwand (20) der Nut (24) öffnet und den Injektor (23) aufnimmt.

5. Eine Wärmekraftmaschine (1) nach Anspruch 4, wobei:
durch jede Innenwand (19) ein Paar von zweiten Durchgangsöffnungen (21) ausgebildet ist, welche jeweils mit einem entsprechenden zweiten flexiblen Lamellenplättchen (22) im Eingriff ist; und
der Injektor (23) innerhalb der Nut (24) zwischen den zweiten Öffnungen (21) angeordnet ist.

6. Eine Wärmekraftmaschine (1) nach einem der Ansprüche 1 bis 5, wobei:
der Einlasskanal (9) durch einen in einer Wand des Zylinders (2) ausgebildeten Einlassport (29) in die Brennkammer (6) führt, so dass der Injektor (23) Brennstoff in die Brennkammer (6) einspritzt; und
die Einspritzdüse (24) des Injektors (23) dem Zylinderkopf (12) abgewandt ist und somit der Brennstoff durch den Injektor (23) gegen den Boden des Zylinders (2) eingespritzt wird.

7. Eine Wärmekraftmaschine (1) nach einem der Ansprüche 1 bis 5, wobei:
der Einlasskanal (9) durch einen in einer Wand des Zylinders (2) ausgebildeten Einlassport (29) in die Brennkammer (6) führt, so dass der Injektor (23) Brennstoff in die Brennkammer (6) einspritzt;
die Einspritzdüse (24) des Injektors (23) dem Zylinderkopf (12) zugewandt ist, so dass der Brennstoff gegen den Zylinderkopf (12) gespritzt wird;
eine erste Längsachse des Injektors (23), welche die Richtung bestimmt, in der der Brennstoff eingespritzt wird, derart geneigt ist, dass ein spitzer Winkel mit einer zweiten Längsachse der Brennkammer (6) eingeschlossen wird; und
die erste Längsachse des Injektors (23) die Elektroden der Zündkerze (13) schneidet.

8. Eine Wärmekraftmaschine (1) nach einem der Ansprüche 1 bis 6, wobei:
der Einlasskanal (9) durch einen in einer Wand des Zylinders (2) ausgebildeten Einlassport (29) in die Brennkammer (6) führt, so das der Injektor (23) Brennstoff in die Brennkammer einspritzt;
die Einspritzdüse (24) des Injektors (23) dem Zylinderkopf (12) zugewandt ist, so dass der Brennstoff gegen den Zylinderkopf (12) gespritzt wird;
eine erste Längsachse des Injektors (23), welche die Richtung bestimmt, in der der Brennstoff eingespritzt wird, derart geneigt ist, dass ein spitzer Winkel mit einer zweiten Längsachse der Brennkammer (6) eingeschlossen wird; und
der Injektor (23) einen Brennstoffstrahl (25) mit einer internen hohlen konischen Form aufgrund eines Lochs mit einer konischen Form im Inneren des Brennstoffstrahls (25) erzeugt; und
der Injektor (23) derart dimensioniert ist, dass das zentrale Loch des Brennstoffstrahls (25) auf der Innenseite die Elektroden der Zündkerze (13) aufweist und folglich der durch den Injektor (23) eingespritzte Brennstoff die untere Wand des um die Zündkerze (13) angeordneten Zylinderkopfs (13) benetzt, während dieser die Elektroden der Zündkerze (13) nicht benetzt.

9. Eine Wärmekraftmaschine (1) nach einem der Ansprüche 1 bis 8, wobei:
und aufweisend ein Schmiermittelzufuhrsystem (30), welches mit einem Zufuhrkanal (33), der in einer Schmiermittelöffnung (34) endet, versehen ist, welche durch eine Wand (15, 16) des Befestigungskörpers (14) des Lamellenventils (11) gemacht ist und neben einer Öffnung (16, 21) für die Luftzufuhr angeordnet ist, so dass die Schmiermittelöffnung (34) durch ein flexibles Lamellenplättchen (17, 22) verschlossen wird, wenn das flexible Lamellenplättchen (17, 22) sich auf der Wand (15, 19) abstützt, um die Öffnung (16, 21) zu verschließen.

10. Eine Wärmekraftmaschine (1) nach Anspruch 9, wobei:
zwischen den beiden äußeren Wänden (15) des Befestigungskörpers (14) eine Nut (24) mit zwei Innenwänden (19) ausgebildet ist, welche parallel zueinander sind und einander zugewandt sind und durch eine Bodenwand (20) miteinander verbunden sind, welche den Boden der Nut (24) bildet; und
durch jede Innenwand (19) ein Paar von zweiten Öffnungen (21) gebildet wird, die jeweils mit einem entsprechenden zweiten flexiblen Lamellenplättchen (22) im Eingriff sind.

11. Eine Wärmekraftmaschine (1) nach Anspruch 10, wobei die Schmiermittelöffnung (34) durch eine Innenwand (19) neben einer zweiten Öffnung (21) ausgebildet ist und von einem entsprechenden zweiten flexiblen Lamellenplättchen (22) verschlossen wird.

12. Eine Wärmekraftmaschine (1) nach Anspruch 9, 10 oder 11, wobei ein Endstück des Zufuhrkanals (33) sich gabelt und in zwei unterschiedlichen und separaten Schmiermittelöffnungen (34) endet.

13. Eine Wärmekraftmaschine (1) nach Anspruch 12, wobei die beiden Schmiermittelöffnungen (34) neben zwei unterschiedlichen Öffnungen (16, 21) für den Lufteinlass angeordnet sind und von zwei unterschiedlichen flexiblen Lamellenplättchen (17, 22) verschlossen sind.

## Revendications

1. Moteur thermique à combustion interne à deux temps (1) avec injection de carburant ; le moteur thermique (1) comprend :
au moins un cylindre (2), qui comprend, à l'intérieur, une chambre de combustion (6) ;
un piston (7), qui est monté à l'intérieur du cylindre (2) de manière à coulisser en va-et-vient ;
une culasse (12), qui ferme la chambre de combustion (6) au sommet et a une paroi inférieure ;
un carter (3), depuis lequel le cylindre fait saillie (2) et dans lequel une chambre de vilebrequin (4) est obtenue ;
un vilebrequin (5), qui est logé dans la chambre de vilebrequin (4) ;
une bielle (8), qui relie le piston (7) au vilebrequin (5) ;
une bougie d'allumage (13), qui est montée à travers la culasse (12) ;
un conduit d'admission (9), qui apporte de l'air frais vers la chambre de combustion (6) ;
une soupape flexible (11), qui est agencée à l'intérieur du conduit d'admission (9) et comprend : un corps de support cunéiforme (14) ayant deux parois extérieures inclinées (15), qui sont à l'opposé l'une de l'autre et ont une inclinaison opposée l'une par rapport à l'autre, au moins deux premières ouvertures (16) pour l'air entrant, qui sont constituées dans les parois extérieures (15), et deux premiers clapets d'admission souples (17), qui ferment les premières ouvertures (16) ; et
un injecteur (23), qui est pourvu d'une buse d'injection (24) à travers laquelle un carburant est injecté vers la chambre de combustion (6), est monté à travers le corps de support (14) de la soupape flexible (11) et à côté de la première ouverture (16) engagée par le premier clapet d'admission souple (17), de sorte que la buse d'injection (24) soit agencée à l'extérieur du corps de support (14), ne soit pas recouverte par le premier clapet d'admission souple (17), et pulvérise du carburant en aval de la soupape flexible (11) par rapport à la direction d'apport d'air frais le long du conduit d'admission (9) ;
le moteur thermique (1) est **caractérisé en ce que** l'injecteur (23) est agencé entre les deux parois extérieures (15) du corps de support cunéiforme (14).

2. Moteur thermique (1) selon la revendication 1, dans lequel :
le corps de support (14) de la soupape flexible (11) renferme et définit un volume intérieur, depuis lequel l'air entrant peut s'écouler vers l'extérieur uniquement à travers les premières ouvertures (16), lorsque les premières ouvertures (16) sont libérées des premiers clapets d'admission souples (17) ; et
la buse d'injection (24) de l'injecteur (3) est agencée à l'extérieur du volume intérieur défini par le corps de support (14) de la soupape flexible (11).

3. Moteur thermique (1) selon la revendication 1 ou 2, dans lequel, entre les deux parois extérieures (15) du corps de support (14), il est obtenu une rainure (24), où l'injecteur (23) est agencé.

4. Moteur thermique (1) selon la revendication 3, dans lequel :
la rainure (24) a deux parois intérieures (19), qui sont parallèles et orientées l'une vers l'autre et sont reliées l'une à l'autre par une paroi de fond (20), qui définit le fond de la rainure (24) ; et
le corps de support (14) a, au centre, un trou traversant (26), qui s'ouvre à travers la paroi de fond (20) de la rainure (24) et loge l'injecteur (23).

5. Moteur thermique (1) selon la revendication 4, dans lequel :
à travers chaque paroi intérieure (19), il est obtenu une paire de secondes ouvertures traversantes (21), chacune d'elles étant engagée par un second clapet d'admission souple (22) correspondant ; et
l'injecteur (23) est agencé à l'intérieur de la rainure (24) entre les secondes ouvertures (21).

6. Moteur thermique (1) selon l'une des revendications 1 à 5, dans lequel :
le conduit d'admission (9) conduit à la chambre de combustion (6) à travers un orifice d'admission (29) obtenu dans une paroi du cylindre (2), de sorte que l'injecteur (23) injecte du carburant dans la chambre de combustion (6) ; et
la buse d'injection (24) de l'injecteur (23) est orientée à l'opposé de la culasse (12) et, par conséquent, le carburant est injecté par l'injecteur (23) vers le fond du cylindre (2).

7. Moteur thermique (1) selon l'une des revendications 1 à 5, dans lequel :
le conduit d'admission (9) conduit à la chambre de combustion (6) à travers un orifice d'admission (29) obtenu dans une paroi du cylindre (2), de sorte que l'injecteur (23) injecte du carburant dans la chambre de combustion (6) ;
la buse d'injection (24) de l'injecteur (23) est orientée vers la culasse (12) de manière à pulvériser le carburant vers la culasse (12) ;
un premier axe longitudinal de l'injecteur (23), qui détermine la direction le long de laquelle le carburant est injecté, est incliné de manière à former un angle aigu avec un second axe longitudinal de la chambre de combustion (6) ; et
le premier axe longitudinal de l'injecteur (23) croise les électrodes de la bougie d'allumage (13).

8. Moteur thermique (1) selon l'une des revendications 1 à 6, dans lequel :
le conduit d'admission (9) conduit à la chambre de combustion (6) à travers un orifice d'admission (29) obtenu dans une paroi du cylindre (2), de sorte que l'injecteur (23) injecte du carburant dans la chambre de combustion (6) ;
la buse d'injection (24) de l'injecteur (23) est orientée vers la culasse (12) de manière à pulvériser le carburant vers la culasse (12) ;
un premier axe longitudinal de l'injecteur (23), qui détermine la direction le long de laquelle le carburant est injecté, est incliné de manière à former un angle aigu avec un second axe longitudinal de la chambre de combustion (6) ;
l'injecteur (23) génère un jet de carburant (25) ayant une forme conique intérieurement creuse en raison d'un trou avec une forme conique présent à l'intérieur du jet de carburant (25) ; et
l'injecteur (23) est dimensionné de telle manière que le trou central du jet de carburant (25) comprenne, à l'intérieur, les électrodes de la bougie d'allumage (13) et, en conséquence, le carburant injecté par l'injecteur (23) mouille la paroi inférieure de la culasse (12) agencée autour de la bougie d'allumage (13) mais ne mouille pas les électrodes de la bougie d'allumage (13).

9. Moteur thermique (1) selon l'une des revendications 1 à 8 et comprenant un système d'apport de lubrifiant (30) pourvu d'un conduit d'apport (33) se terminant dans un orifice de lubrification (34), qui est constitué à travers une paroi (15, 19) du corps de support (14) de la soupape flexible (11) et est agencé à côté d'une ouverture (16, 21) pour l'air entrant, de sorte que l'orifice de lubrification (34) soit fermé par un clapet d'admission souple (17, 22), lorsque le clapet d'admission souple (17, 22) repose contre la paroi (15, 19) afin de fermer l'ouverture (16, 21).

10. Moteur thermique (1) selon la revendication 9, dans lequel :
entre les deux parois extérieures (15) du corps de support (14), il est obtenu une rainure (24) ayant deux parois intérieures (19), qui sont parallèles et orientées l'une vers l'autre et sont reliées l'une à l'autre par une paroi de fond (20), qui définit le fond de la rainure (24) ; et
à travers chaque paroi intérieure (19), il est obtenu une paire de secondes ouvertures (21), chacune d'elles étant engagée par un second clapet d'admission souple (22).

11. Moteur thermique (1) selon la revendication 10, dans lequel l'orifice de lubrification (34) est constitué à travers une paroi intérieure (19) à côté d'une seconde ouverture (21) et est fermé par un second clapet d'admission souple (22) correspondant.

12. Moteur thermique (1) selon la revendication 9, 10 ou 11, dans lequel une partie finale du conduit d'apport (33) bifurque et se termine dans deux orifices de lubrification (34) distincts et séparés.

13. Moteur thermique (1) selon la revendication 12, dans lequel les deux orifices de lubrification (34) sont agencés à côté de deux ouvertures (16, 21) différentes pour l'air entrant et sont fermés par deux clapets d'admission souples (17, 22) différents.
